(19) **Europäisches Patentamt**

**European Patent Office**

**Office européen des brevets**

(11) Publication number: **0 407 223 A2**

# (12) EUROPEAN PATENT APPLICATION

(21) Application number: **90307437.5**

(22) Date of filing: **06.07.90**

(51) Int. Cl.⁵: **H02J 7/04**

(30) Priority: **07.07.89 US 377370**

(43) Date of publication of application:
**09.01.91 Bulletin 91/02**

(84) Designated Contracting States:
**DE FR GB**

(71) Applicant: **EVEREADY BATTERY COMPANY, INC.**
**Checkerboard Square**
**St. Louis, Missouri 63188(US)**

(72) Inventor: **Smilanich, Nicholas Joseph**
**3449 Delmar Drive**
**Rocky River, Ohio 44116(US)**
Inventor: **Sphar, Robert Altman**
**25880 Myrtle Avenue**
**Olmsted Falls, Ohio 44138(US)**

(74) Representative: **Lord, Hilton David et al**
**Marks & Clerk 57-60 Lincoln's Inn Fieldslds**
**London WC2A 3LS(GB)**

(54) **Rechargeable batteries and chargers therefor.**

(57) The present invention relates to rechargeable batteries and chargers therefor, the battery preferably being suitable for fast-charging and having a band detectable by the charger to indicate to the charger that a different rate of charging should be applied to the battery.

EP 0 407 223 A2

## RECHARGEABLE BATTERIES AND CHARGERS THEREFOR

The present invention relates to rechargeable batteries and to chargers capable of detecting such.

Many household appliances and light industry apparatus utilise cordless power supplies, such as batteries. In recent years the rechargeable, or secondary, battery has emerged as a prime power supply for such devices and, with the increase of battery operated toys, power tools and the like, new demands have been made on not only rechargeable batteries, but also on charging units.

The basic requirement for a battery charging unit is that it provide a source of direct current having a voltage higher than that of the fully charged, rechargeable battery. Many techniques for charging secondary batteries are known, and the circuit components employed in such techniques are usually determined by the amount of control desired over the charging current and/or voltage.

With different types of secondary battery, the charging current and voltage requirements vary, and the battery is usually labelled or specified with a specific charge rate in terms relating to its ampere-hour capacity. Accordingly, the charge rate in amperes is determined by dividing the battery capacity in ampere-hours by the desired time of charging in hours; for example, 10 hours, but charging for a somewhat longer time or higher current is usually employed to ensure full capacity discharge from the battery. Typical charge rates in current commercial use range from about a one-hour rate to about a 30-hour rate.

Most secondary battery units exhibit self-discharge and, consequently, when left on a shelf for a long period of time, gradually lose charge or capacity. Thus, to maintain a battery in a peak charge condition, it may be advisable to charge the battery on a very low charge rate (a "trickle charge"). Of course, the trickle rate may vary with different battery units but is generally about a 20-hour rate.

Recent nickel-cadmium cells and batteries have been developed that can take a fast charge at a one-hour rate or less. Thus, with the use of fast charge cells, shorter recharging times can be used. Various proposals made for charging secondary nickel-cadmium cells and batteries at high rates require some sort of fail-safe means for terminating the high rate charge. If overcharge is continued at too high a rate of charge current, the oxygen gas, which normally reacts or combines with the active cadmium metal on the surface of the negative electrodes (the "oxygen recombination" principle), may not fully recombine and, consequently, may result in an excessive internal gas pressure build up. This can not only damage the cell, but can also cause the cell, under certain conditions, to disassemble.

One proposal for minimising overcharge is to incorporate a pressure operated switch in the cell whioh would automatically cut off the charging current when the internal gas pressure reached a predetermined level. Another proposal entails the incorporation of an oxygen-consuming auxilliary electrode in the cell to consume the oxygen gas as it evolves, thereby preventing the build up of excessive internal gas pressure.

Therefore, it is necessary to ensure that a fast charge at a high rate or current is not employed to charge batteries that should be charged at lower current rates. Fast charge rate batteries may employ temperature sensing means to detect the temperature rise of the battery, or use external voltage sensing means to detect the voltage of the battery during charging, both of which are indicative of the charge condition of the battery. These means can be used to terminate a oharging operation, thereby to prevent overcharge of the battery.

US-A-4,628,243 discloses a battery charging system provided with means for detecting special indicia on the battery so that only batteries with this special indicia can be charged by the system. Thus, only cells with the special indicia can be charged using this battery charging system.

US-A-3,506,902 discloses the use of a separate, circumferential charging terminal positioned on a rechargeable battery so that a charger will only charge a rechargeable battery that is designed with this separate circumferential charging terminal. The separate terminal may be formed by cutting away a portion of the cell's insulation wrapper to expose an area of its conductive casing which can be used as the separate charging terminal.

US-A-4,489,268 discloses a battery that employs a separate charging terminal distinct from the external power terminal, allowing the charging terminal to engage a corresponding charging contact positioned in the battery charger.

Thus, the present invention provides rechargeable batteries and chargers therefor, the battery preferably being suitable for fast-charging and having a band detectable by the charger to indicate to the charger that a different rate of charging should be applied to the battery.

In a preferred aspect, the present invention provides a battery charging device for charging at least one rechargeable battery, the device being adapted to recognise a marked battery and to provide a specified charging rate to the marked battery, characterised in that the device is adapted to recognise at least one band on the battery and to charge the battery via its output terminals.

The present invention also provides a rechargeable battery for use with the devices of the invention.

In an alternative aspect, the present invention provides a battery charger system adapted to provide at least two different rates of charging current to rechargeable batteries and adapted to distinguish which rechargeable battery of similar size batteries should get which rate of charging current; the battery charger system comprising a rechargeable battery having a positive terminal spaced apart from a negative terminal for delivering power and having an indicator band disposed between the positive terminal and the negative terminal to indicate which rate of charging current it can accommodate; a charging device comprising current means for delivering at least two different rates of charging current; and detection means for sensing the presence and location of the indicator band on the rechargeable battery and for directing the circuit means to provide a specific rate of charging current to the rechargeable battery depending on the location of the indicator band on the rechargeable battery.

Preferred rechargeable batteries according to the present invention are suitably for use in a charging device capable of delivering at least two different rates of charging current, the rechargeable battery having a positive terminal and a spaced-apart negative terminal for delivering power to external devices and for receiving a charging current, and having an indicator band disposed between the positive terminal and the negative terminal in which the location of the indicator band is indicative of the rate of charging current the rechargeable battery can safely accommodate other than a different rate of charging current it could also accommodate if it did not have an indicator band.

As used herein, the term battery refers to one or more cells.

Thus, the present invention is advantageous in providing rechargeable cells which, through the provision of positioned bands, can be readily identified by a suitable charger which can then charge the battery according to its needs.

An advantage of the chargers of the invention is that, when they fail to detect a battery of the invention, they can provide a general charge rate.

Specifically, the present invention provides a rechargeable battery with an indicator band that can be sensed by a charging device so that a specific preferred charge rate can be applied to the rechargeable battery depending on the location of the indicator band on the battery. A charging device therefore in accordance with the invention, is capable of sensing the presence of the indicator band on a rechargeable battery and, on sensing the band, provides a specific preferable charge rate to the rechargeable battery according to the location of the indicator band.

The battery charger device is preferably designed to provide at least two different rates of charging current.

The band on the battery is preferably indicative of the specific rate of charge the battery can safely accept. The band may comprise one or more strips, and these may be of even or varying width, or thickness, and may be continuous, discontinuous, or only extend a limited distance around the battery as required. For example, in the case of a cell having rectangular cross-section, the band may only be present on two parallel sides, possible as a series of dots, dashes or both or any other suitable form, or may only be present on one side.

Generally, the indicator band of the rechargeable battery will be in the form of an indicating means having characteristics different from the outer wall of the battery, so that the band can be detected by its different characteristics. The indicator band may, for example, be a conductive or non-conductive strip located on the rechargeable battery where, for example, the battery is encased in an insulative or conductive outer jacket or label, respectively. Alternatively, the band may be a magnetic or non-magnetic strip, where the outer wall of the battery is non-magnetic or magnetic, respectively; or it may be a reflective or non-reflective strip according to the reflective properties of the outer wall of the battery. Other suitable possibilities will be apparent to those skilled in the art.

In the case of a rechargeable battery housed in a conductive container and wrapped in insulating label material, the label may be separated at a suitable location, thereby exposing an area of the conductive container to provide the indicator band of the invention.

In another embodiment, a separate conductive band may be disposed about the outer wall of the battery and used as the indicator band.

The only particular requirement is that the indicator band provides a distinct indicator means that can be detected by an appropriate charging system, prferably so that the charging system can deliver a preferred rate of charging current to the battery. For the example, the battery may be made to accept both a trickle charge and a fast charge. In such a case, the preferred rate of charge would be the fast charge for most situations, the indicator band being provided on the rechargeable battery as a means detectable by the charging system so that a fast charge is delivered. Without the indicator band, the rechargeable battery could be given a trickle charge.

The situation described above has two advantages. The first is that the battery can be fast charged when desired, provided that a suitable charger was available. If a suitable charger were not available, then the battery could still be charged at a slow, or even trickle, rate. The second advantage is that the charger is adapted to provide a fast charge, but will only do so when it detects an appropriate battery. Otherwise, the charger will deliver only a standard rate for type of battery concerned, so that the charger can still be used, even for normal batteries.

It is preferred that the indicator band is used to indicate the preferred rate of charging current that the battery can safely accommodate.

Any suitable cells may comprise the batteries of the present invention, although these will generally be suitable for fast charging. It will be appreciated that it is not essential that the batteries be suitable for fast charging, and that the use of detectable bands is a useful form of classification for all batteries and that, depending on the location and number of bands, and even of band type(s), the charger can be set to charge the battery according to its needs.

The cell type may be of any shape, such as having a rectangular cross-section, but it is generally preferred that it is cylindrical.

With regard to the band on the battery, this may be made or constructed in any suitable manner and of any suitable material, such as described above. A preferred form is a simple cutaway of the outer insulating layer of a standard cell, leaving a conductive strip detectable by the charger. This embodiment is robust, but others may equally be used, such as layer of reflective material for detection by a photoelectric device, for example.

The band may be of varying thickness, varying position, in varying numbers and of varying materials, acoording to preference. A double band, for example, might indicate a certain voltage, and one strip could be thick and the other thin to indicate the size of cell, while one strip might further comprise a fluorescent material to further indicate the type of active material. The possibilities for different codes of such a simple nature is effectively unbounded, and yet easy to manufacture, and can easily be used to indicate to a charger exactly what might be required for a given battery.

At the simplest, and in a preferred embodiment, only one band is provided, and any coding is by means of position on the battery. A central position is not preferred, as the charger may not be able to distinguish which way around the battery has been inserted. Width of the band can provide further information if required as, for example, a wider detecting electrode could not detect a narrower cutaway.

The charger itself, at the minimum, need only be capable of passing one current, provided that it recognises a battery marked according to the present invention. Preferably, the charger will be capable of charging at at least two different rates, so that unmarked batteries placed in the charger will be charged at a rate commensurate with that standard cell type, while the batteries of the invention may be charged according to their needs.

One type of preferred charger is capable of charging several different types of battery at their required rates, and is adapted to read different codes as exemplified above. It will be appreciated that different sizes of battery may have entirely different charging requirements, but may have exactly the same codes, as the size of battery will determine where in the charger the code will be read. However, it is generally preferred that the same code means the same thing, so that the observer may readily appreciate what sort of battery he is looking at.

In a preferred form, the charger has an indicator, such as a lamp, which indicates to the user what mode the charger is in, such as fast or normal charging. Such indication may be in the form of a series of lights on a panel, the panel being marked as appropriate.

The indicator band may comprise one or more distinct strips positioned at a desired location on the battery to indicate the optimum and safe rate current that the battery could accept. When using more than one strip, the charging system would be designed to detect the presence of the multi-strip indicator in the battery before charging the battery with a rate of current corresponding to the rate of current indicative of the multi-strip indicator. Preferably the indicator band would be positioned off centre between the positive and negative terminals so that the preferred rate of current (usually a higher rate of current) would be given only when the battery was properly positioned in the charging device. If for some reason the battery was forced into the charging device in the reverse position, then only the current (usually trickle charge) that would be applied if the indicator band was not present would be applied.

The charger for use in the subject invention should preferably be capable of delivering at least two different rates of charging current and be provided with means for detecting the presence of the indicator band on the rechargeable battery. EP-A-0 361 859 discloses an electronic battery charger device that can deliver at least two different rates of charge current and which may be adapted for use with the rechargeable cells of this invention. This charger device includes means capable of individually evaluating a plurality of batteries of the same or of different kinds and with the same or different existing charge levels to be charged to determine which can be fast charged and which cannot, and proceeding to charge them accordingly.

The device of EP-A-0 361 859 is for charging one or more batteries and comprises a circuit having terminal means for conneoting to the terminal means on one or more batteries to be charged, the circuit including a source of electric energy, controllable switching means connected respectively between the energy source and each battery to be charged, a microprocessor having a control connection to each of the controllable switching means for controlling communication between the energy source and the respective batteries to be charged, the microprocessor including means to sequentially control the switch means to supply charging current to the batteries one at a time in repeating periods, means responsive to the voltage across the terminals of each battery prior to and during each charging period thereof operatively connected to the microprocessor, the microprocessor being programmed to calculate the difference between the battery terminal voltage of each battery prior to and when it is being charged, means to store for each battery the minimum value of the voltage difference during each charging period, and means to terminate a charging operation for a battery when the battery terminal voltage difference being calculated exceeds the minimum stored value of the battery terminal voltage difference by a predetermined amount.

The device preferably includes means to compare the value of the terminal voltage of each battery during succeeding charging intervals, and means to terminate a charging operation for a battery when the terminal voltage of a battery decreases during a predetermined number of succeeding charging periods. In particular, it is preferred that the microprocessor includes a timer for controlling the switches to individually apply battery charging energy from the energy source respectively to each of the batteries to be charged in a repeatable sequence of charging and non charging periods.

US-A-3,911,350 discloses a dual battery charging rate device which can deliver two different rates of charging current for a rechargeable cell. The charger device may be adapted for use in accordance with the present invention so as to have means for detecting the indicator band on the reohargeable battery. Once the indicator band is detected, the device can then deliver a preferred rate of charging current to the rechargeable battery. If the battery does not have an indicator band, then a different rate of charging current can be applied to the terminals of the battery. As stated above, the battery may be charged through its normal battery terminals, while the indicator band is provided as a means for informing the charger device that the battery can safely accept a rate of charging current (usually fast charge) that might be too high for other types of battery.

Destruction of the indicator band on the battery will still permit the battery to be charged; however, the charge would be at a different rate of charging current.

A preferred rechargeable battery for use in accordance with the present invention comprises a conventional type cylindrical battery having an insulating label disposed about the wall of the battery and wherein the label is split or cut so as to expose an annular area of the conductive container of the battery. The location of the annular area of the exposed container is preferably off-centre, so as to ensure that the preferred rate of charge is applied only when the battery is inserted in the proper manner.

The invention will now be further illustrated with reference to preferred embodiments as illustrated in the accompanying drawings, in which:

Figure 1 is a circuit diagram showing a rechargeable battery of this invention being charged; and

Figure 2 is a diifferent circuit diagram showing a rechargeable battery of this invention being charged.

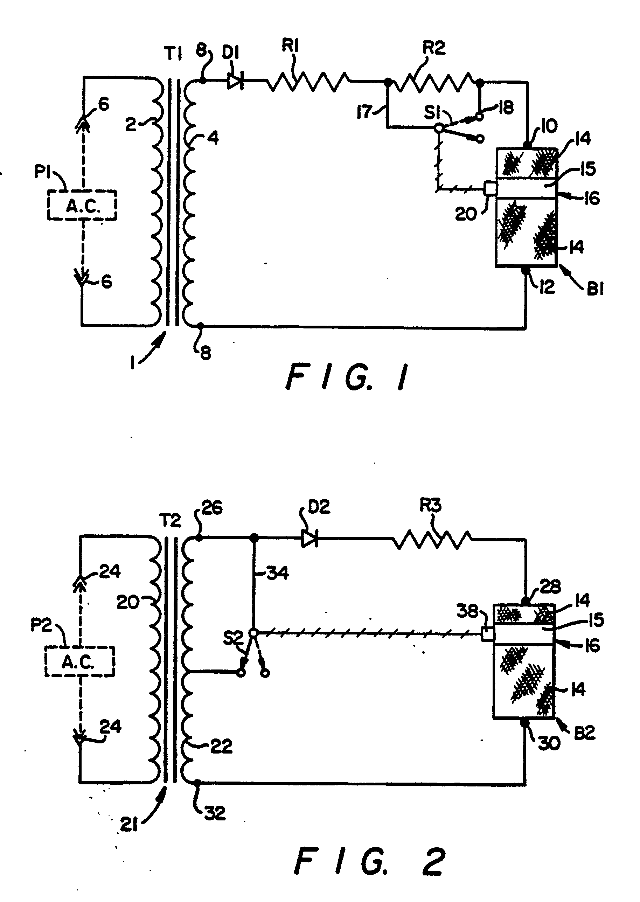

Referring to figure 1, the charger device 1 is provided with a transformer T1 having a primary winding 2 and secondary winding 4. The primary terminals 6-6 are adapted to connect to an alternating power supply P1. One secondary terminal 8 is connected to a diode D1 which is connected in series to resistor R1 which in turn is connected in series to resistor R2. The terminal from resistor R2 forms a first output terminal while the second output terminal 12 is connected to the other end of secondary terminal 8 of transformer T1. With a battery B1 inserted in output terminal 10-12 of the charger device 1 and with an alternate current supply P1 connected to the primary terminals 6-6, a charging current flows into the battery B1. The diode D1 ensures that the current only flows in one direction while the resistors R1 and R2 determine the amount of current fed into the battery B1.

As shown in Figure 1, the insulating jacket 14 on the battery B1 is separated to provide an annular exposed area of 15 of the conductive container 16 of the battery B1. One electrical contact 17 is connected to one side of resistor R2 with its opposite end connected to one side of switch S1. A second electrical contact 18 is connected to the other side of resistor R2 with its opposite end connected to the other side of switch S1. In the normal operating position, switch S1 would be opened so that resistor R2 would be connected in the circuit. In the closed position (shown by broken lines), switch S1 would short resistor R2 and remove it from the circuit. The value of resistor R1 and resistor R2 is selected to provide a current that could be in the range of a trickle charge, while R1 is selected so that if it were used alone the current charge would be in the range of a fast charge.

A detector means 20, such as a mechanical or electrical device, activates switch S1 when it detects the annular exposed area 15 of the conductive container 16 of battery B1. Detector means 20 could be a conventional device which could detect a conductive area and thereby complete a circuit that would deliver a current to activate switch S1 or it could be a magnetic device that upon detecting a magnetic band would activate switch S1.

In the operational mode, once the battery B1 is inserted into the charger device 1 and contacts the terminals 10 and 12, the circuit will be complete and permit charging current to flow through battery B1. If the detector means 20 detects the annular exposed area 15, switch S1 will be activated to the closed position (shown by broken lines) thereby effectively removing resistor R2 from the circuit. With resistor R2 removed from the circuit, the charging current will increase and provide a quick charge to battery B1. On the other hand, if the annular exposed area 15 is not provided in battery B1, then switch S1 will remain in the open position (shown by solid line) and resistors R1 and R2 would remain in series in the circuit and provide a trickle charge to the battery.

Figure 2 shows another embodiment of the invention in which a transformer T2 comprises primary winding 20 and secondary winding 22. The primary terminals 24-24 are adapted to connect to an alternating current power supply P2. One secondary terminal 26 is connected to diode D2 which in turn is connected in series with resistor R3. The opposite end of resistor R3 is connected to one output terminal 28 while the other output terminal 30 is connected to the secondary terminal 32 of transformer T2. Output terminals 28-30 are adapted to receive a rechargeable battery B2. With a battery B2 inserted in output terminals 28-30 of the charger device 21 and with an alternating current connected to primary terminals 24-24, a charge current flows into the rechargeable battery B2.

One end of a first electrical contact 34 is connected to terminal 26 of the secondary winding 22 with its opposite end connected to one end of switch S2. The opposite end of switch S2 is connected to the midpoint of the secondary winding 22. Switch S2 is normally in the closed position (shown by solid line) so that current induced in the secondary winding 22 will comprise only half the winding. Connected to switch S2 is detector means 38 which operates switch S2 when it detects the annular exposed area 15 of conductive container 16 of battery B1. With the switch S2 in the normal closed position (shown by solid line), one half of the winding in the secondary winding 22 will be shorted, producing only a trickle charge to battery B2.

Battery B2 is identical to battery B1 of Figure 1 and has its insulating jacket 14 cut to provide an annular exposed area 15 of the conductive container 16 of battery B2. In the operational mode, a battery B2 is inserted into the charger device 21 to contact terminals 28-30 thereby completing the circuit of the charger. Resistor R3 is selected so that the charger provides a selected current charge (trickle charge) to battery B2.

If detector 38 detects the annular exposed area 15 of battery B2, switch S2 will be activated to the open position (shown by broken lines), thereby effectively including the remaining one-half of the secondary windings into the circuit so that the full secondary winding is in the circuit. This will result in charging the charging current of the circuit to a fast charge rate. Thus a different charging current is provided to battery B2 if an indicator band such as the annular exposed area 15 is sensed by detector 38.

It will be appreciated that the invention may be modified in any suitable manner by one skilled in the art, beyond those embodiments described above. For example, a magnetic operating switch could be used to shunt resistor R1 in Figure 1, when in the closed position, and the switch could respond to the detection of a magnetic material. Thus, when the indicator band on the rechargeable battery is a magnetic band and when the rechargeable battery is placed in the charger device, the magnetic band could activate the magnetic switch to the closed position, thereby shunting resistor R2 from the circuit. Another example would be to use a photocell switch that would be responsive to the reflection of the emitting light of the photocell. Thus the indicator band on the rechargeable battery might be a reflective band so that, when the rechargeable battery is inserted into the charger device, the light from the photocell would be reflected, thereby operating a conventional switch that would shunt a resistor or a portion of the windings in the secondary winding of the transformer in the circuit.

**Claims**

1. A battery charging device for charging at least one rechargeable battery, the device being adapted to recognise a marked battery and to provide a specified charging rate to the marked battery, characterised in that the device is adapted to recognise at least one band on the battery and to charge the battery via its output terminals.

2. A device according to claim 1, wherein the device is adapted to charge any suitable battery at a rate appropriate to the battery type, the device only charging at the specified rate when a marked battery, preferably a fast-charging battery, is recognised.

3. A device according to claim 1 or 2, wherein the device is adapted to provide two or more specified charging rates, the rate preferably being determined by size of battery and/or characteristics of the band.

4. A device according to any preceding claim, further comprising a timer to terminate charging, preferably according to the charging rate and/or battery characteristics.

5. A device according to any preceding claim, wherein the device is adapted to recognise a conductive band, a magnetic band and/or a reflective band on the rechargeable battery.

6. A device according to any preceding Claim, wherein the charge is provided by means comprising a transformer with primary windings adapted to be coupled to an alternating power source, secondary windings coupled to rectifier means and resistive means so as to provide a circuit for supplying current to charge the rechargeable battery; and wherein a portion of the resistive means is shunted from the charging circuit when the device recognises an indicator band on a rechargeable battery.

7. A device according to any of claims 1 to 5, wherein the charge is provided by means comprising a transformer with primary windings adapted to be coupled to an alternating power source, secondary windings coupled to rectifier means and resistive means so as to provide a circuit for supplying current to charge the rechargeable battery; and wherein the full secondary windings are adapted to be included when the device recognises an indicator band on a rechargeable battery.

8. A rechargeable battery as defined in any preceding claim for use with a device according to any preceding claim.

9. A battery according to claim 8, comprising a conductive container wrapped with an insulative material, the insulative material being separated to expose a portion of the conductive container, preferably at a location different from the midpoint of the longitudinal axis expose an annular area of the conductive container, the exposed portion of the conductive container forming the indicator band.

10. A battery according to Claim 8 or 9, wherein the battery is a cylindrical rechargeable battery.

11. A battery charger system comprising a device according to any one of claims 1 to 7 and a battery according to any one of claims 8 to 10.

12. A battery charger system adapted to provide a least two different rates of charging currents to rechargeable batteries and adapted to distinguish which rechargeable battery of similar size batteries should get which rate of charge current, the battery charger system comprising a rechargeable battery having a positive terminal and a spaced-apart negative terminal for delivering power and having an indicator band disposed between the positive terminal and the negative terminal to indicate the preferred charge rate of current the rechargeable battery can accommodate: a charging device comprising current means for delivering at least two different rates of charging current; and detection means for sensing the presence and location of the indicator band in the rechargeable battery and for directing the current means to provide a specific rate of charging current to the rechargeable battery depending on the presence and location of the indicator band on the rechargeable battery,

said device and/or battery optionally further comprising any one or more features as defined in any preceding claim, in any suitable combination.

F I G. 1

F I G. 2